# EUROPÄISCHE PATENTSCHRIFT

(11) **EP 1 293 254 B1**
(45) Veröffentlichungstag und Bekanntmachung des Hinweises auf die Patenterteilung: **23.03.2005**
(21) Anmeldenummer: 02018696.1
(22) Anmeldetag: 21.08.2002
(51) Int. Cl.: B01F 3/04, B03D 1/24, B03D 1/14

(54) **Verfahren und Vorrichtung zur Belüftung einer Flüssigkeit mit Gas**
Method and device for aerating a liquid with a gas
Procédé et dispositif d'aération d'un liquide avec un gaz

(30) Priorität: 17.09.2001 AT 14582001
(43) Veröffentlichungstag der Anmeldung: 19.03.2003
(73) Patentinhaber: Andritz AG, 8045 Graz (AT)
(72) Erfinder: Scherzinger, Bernhard, Dipl.-Ing. Dr., 1030 Wien (AT); Gabl, Helmuth, Dipl.-Ing. Dr., 8046 Graz (AT)
(74) Vertreter: Schweinzer, Friedrich

(56) Entgegenhaltungen:
- WO-A-96/22250
- DE-A- 19 715 958
- US-A- 2 212 598
- US-A- 4 210 534

## Beschreibung

Die Erfindung betrifft ein Verfahren zur Belüftung einer Flüssigkeit mit Gas, insbesonders zum Einsatz bei Verfahren zur Abtrennung von Störstoffen aus Suspensionen durch Flotation, umfassend das Eindüsen von Flüssigkeit in ein über einem Flüsigkeitsvolumen befindliches Gasvolumen, und eine Vorrichtung zur Belüftung einer Flüssigkeit mit Gas, insbesonders zum Einsatz bei Anlagen oder Vorrichtungen zur Abtrennung von Störstoffen aus Suspensionen durch Flotation, umfassend einen Druckbehälter für die Flüssigkeit und ein darüber befindliches Gasvolumen, mit einem Druckanschluss für das Gas im oberen Bereich des Druckbehälters und eine Düse für das Eindüsen von Flüssigkeit.

Die Flotation ist ein physikalisch-mechanisches Verfahren zur Abtrennung von Störstoffen aus Suspensionen. Dieses Verfahren ist an die Erzeugung von Gasblasen in geeigneter Menge und Größenverteilung gebunden. Hydrophobe oder hydrophobierte Stoffe werden durch die anhaftenden Gasblasen an die Flüssigkeitsoberfläche getragen und können dort mit dem Schaum entfernt werden. Verfahren dieser Art sind beispielsweise aus der DE 41 16 916 C2 bekannt und haben einen hohen technischen Standard erreicht. Zur Erzeugung der Gasblasen und Mischung mit der Suspension kommen oftmals selbstansaugende Injektoren zum Einsatz, bei welchen der aus einer Düse austretende Strom der mit den Störstoffen beladenen Suspension einen Unterdruck erzeugt und Gas ansaugt, welches infolge des Impulsaustausches zwischen Gas und Flüssigkeit damit vermischt wird. Eine derartige Vorrichtung ist beispielsweise in der DE 34 12 431 A1 beschrieben.

Ein besonderes Problem bei den Flotationsverfahren ist die Bereitstellung der mit Gas gesättigten Flüssigkeit, in welcher dann die Gasbläschen zur Ausbildung gebracht werden soll. In der EP 789 672 A1 ist dazu ein Gerät geoffenbart, bei dem unter Druck stehende Flüssigkeit über eine Sprühdüse in den oberen Abschnitt eines Druckgefäßes eingebracht wird, wobei dieser obere Abschnitt mit unter Druck stehendem Gas gefüllt ist. Dabei kommt die Flüssigkeit meist nur kurzzeitig mit dem Gas in Berührung, so dass wenig Gas eingebracht und zu geringe Turbulenz erzeugt wird. Daher muss die Flüssigkeit typischerweise mehrmals umgewälzt werden bzw. muss bei höheren Sättigungsdrücken gearbeitet werden, was einen erhöhten Energiebedarf und einen erhöhten Energieeintrag in der nachfolgenden Flotationsstufe nach sich zieht. Auch können mit dem Abfluss der gesättigten Flüssigkeit Gasblasen mit ausgetragen werden, was die Effizienz der nachfolgenden Flotation drastisch verringert.

Weiters ist aus der AT 407 844 ein Verfahren zur Belüftung von Dispersionen, mit Flotationszellen mit einer freien Oberfläche der Suspension bekannt, wobei der Schaum von der Oberfläche über einen Überlauf abgetrennt wird. Auch die DE 198 45 536 zeigt ein Verfahren, bei dem Gas mit der Flüssigkeit vermischt wird. Als Gas kommt vorteilhafterweise Luft zum Einsatz, die sich in der Flüssigkeit lösen soll. Durch die hohe herrschende Strömungsgeschwindigkeit kann nur ein geringer Teil der zur Verfügung stehenden Luft wirklich gelöst werden. Außerdem wird die Luft nicht aus einem Überdruckraum angesaugt, so dass auch die Löslichkeit des Gases/der Luft nur in geringem Maße gegeben ist. Die DE 40 29 982 zeigt mehrere Varianten von Düsen, wobei spezielle Vorrichtungen, wie gelochte Rohrstücke zur besseren Verteilung der Luft in der Suspension dienen. Durch eine derartige Ausführung wird jedoch ein zusätzlicher Druckverlust auf der Gasseite erzeugt, so dass hier die Löslichkeit in der Flüssigkeit stark reduziert wird. Ein Einsaugen des Gases/der Luft durch die Flüssigkeit wird durch diese spezielle Verteileinrichtung ebenfalls stark beeinträchtigt. Wird als Flüssigkeit eine Faserstoffsuspension eingesetzt, kann es zusätzlich zu Verstopfungen der Bohrungen kommen. Die US 4 210 534 beschreibt eine Düse und ein Verfahren, bei dem Abwasser durch Eindüsen von Gas (Sauerstoff oder Luft) belüftet wird. Hier wird Gas von einem zusätzlichen Speicher in einen Strom eingedüst, was zusätzliche Energie und Mittel benötigt.

Die WO 96/22250 beschreibt eine Vorrichtung umfassend einen Druckbehälter für die Flüssigkeit und ein darüber befindliches Gasvolumen, mit einem Druckenschluss für das Gas im oberen Bereich des Druckbehälters, und eine Düse für das Eindüsen von Flüssigkeit.

Die Aufgabe der vorliegenden Erfindung waren daher ein Verfahren und eine Vorrichtungen zur Aufsättigung einer Flüssigkeit mit einem Gas mit wesentlich verbessertem Stoffübergang und effektiver Annäherung an die maximal erreichbare Sättigung bei geringem Energiebedarf.

Zur Lösung der Aufgabe ist erfindungsgemäß ein Verfahren vorgesehen, bei welchem das Gasvolumen unter Überdruck steht und ein Teilvolumen des Gasvolumens durch den Unterdruck der aus einer im Kopf eines im Inneren des Druckbehälters eingesetzten Injektors mündenden Düse austretenden Flüssigkeit angesaugt und zusammen mit der Flüssigkeit weitertransportiert, dabei intensiv mit der Flüssigkeit durchmischt und in das Flüssigkeitsvolumen ausgetragen wird. Um maximalen Stoffaustausch zu erreichen, wird also dadurch die Flüssigphase bei großer Stoffaustauschfläche möglichst turbulent geführt und das Gas-Flüssigkeitsgemisch in die Flüssigkeit eingetragen.

In einfacher Weise kann das Ansaugen des Gases in die Flüssigkeit dadurch bewerkstelligt werden, dass die Flüssigkeit nach dem Freistrahlprinzip aus der Düse austritt.

Für hohe Turbulenz durch eine große umgewälzte Luftmenge ist gesorgt, wenn gemäß einem weiteren Merkmal der Erfindung das Verfahren bei Luftbeladungen von 80 bis 170%, vorzugsweise über 100%, durchgeführt wird.

Vorteilhafterweise werden nach der Durchmischung austretende Gasblasen in das Gasvolumen rückgeführt.

Die Vorrichtung ist zur Lösung der eingangs gestellten Aufgabe erfindungsgemäß dadurch gekennzeichnet, dass die Düse im Kopf eines im Inneren des Druckbehälters eingesetzten Injektors mündet, welcher Injektor in den unteren, die Flüssigkeit aufnehmenden Teil des Druckbehälters ragt und dessen Kopf mit dem oberen, das Gasvolumen beinhaltenden Bereich des Druckbehälters verbunden ist.

Die Geschwindigkeit und Turbulenz in der Mischungszone kann weiter dadurch erhöht werden, dass sich die Querschnittsfläche eines Endstückes des Kopfes des Injektors in Strahlrichtung gesehen verringert.

Dabei kann gemäß einer vorteilhaften Ausführungsform weiters vorgesehen sein, dass anschließend an den Kopf des Injektors ein Mischrohr mit im wesentlichen konstanter Querschnittsfläche vorgesehen ist.

Gemäß einer weiteren Ausführungsform kann vorgesehen sein, dass sich an den Kopf oder das Mischrohr ein Diffusor mit sich in Strahlrichtung vergrößemder Querschnittsfläche anschließt.

In vorteilhafter Weise schließt an den Diffusor ein Leitrohr für die gasgesättigte Flüssigkeit an, wobei zumindest dieses Leitrohr in die Flüssigkeit eintaucht.

Dabei erzeugt der nach dem Freistrahlprinzip aus der Treibstrahldüse austretende Flüssigkeitsstrom einen Unterdruck, der zum Ansaugen der Luft im Kopf des unter Druck stehenden Sättigungsbehälters (3 bis 10 bar) benutzt wird. Im Mischrohr erfolgt eine intensive Durchmischung von Luft und Flüssigkeit und der nachfolgende Diffusor dient zur Energierückgewinnung. Schließlich wird die Blasendispersion am Boden des zylindrischen Sättigungsbehälters eingebracht, wodurch die gesamte Flüssigkeitshöhe für den Stoffaustausch genutzt wird. Die aufsteigenden Gasblasen sammeln sich im oberen Bereich (Kopf) des Sättigungsbehälters, wo die Luft wiederum angesagt und somit ein Umlauf des Gases bewirkt wird.

Um nach dem Durchmischen von Gas und Flüssigkeit die Energie des Flüssigkeitsstromes zu vergleichmäßigen, kann hinter dem Diffusor oder dem Leitrohr ein in der Flüssigkeit untergetauchter Radialdiffusor angeordnet sein.

Die Abtrennung von nicht gelösten Gasblasen wird erfindungsgemäß durch eine im wesentlichen zylindrische Blende ermöglicht, welche zumindest den unteren Bereich des in der Flüssigkeit eingetauchten Abschnitts des Diffusors, Leitrohres oder Radialdiffusors umgibt, und welche Blende vom Boden des Druckbehälters ausgeht.

Dabei ist vorteilhafterweise vorgesehen, dass der Austritt für die gasgesättigte Flüssigkeit aus dem Druckbehälter unterhalb des oberen Randes der Blende angeordnet ist.

In der nachfolgenden Beschreibung soll die Erfindung anhand der in den Zeichnungsfiguren dargestellten Ausführungsbeispiele näher erläutert werden. Dabei zeigt Fig.1 eine erfindungsgemäße Flotationsanlage in schematischer Darstellung, und Fig.2 und 3 sind erfindungsgemäße Vorrichtungen zum Belüften einer Flüssigkeit, ebenfalls in schematischer Darstellung.

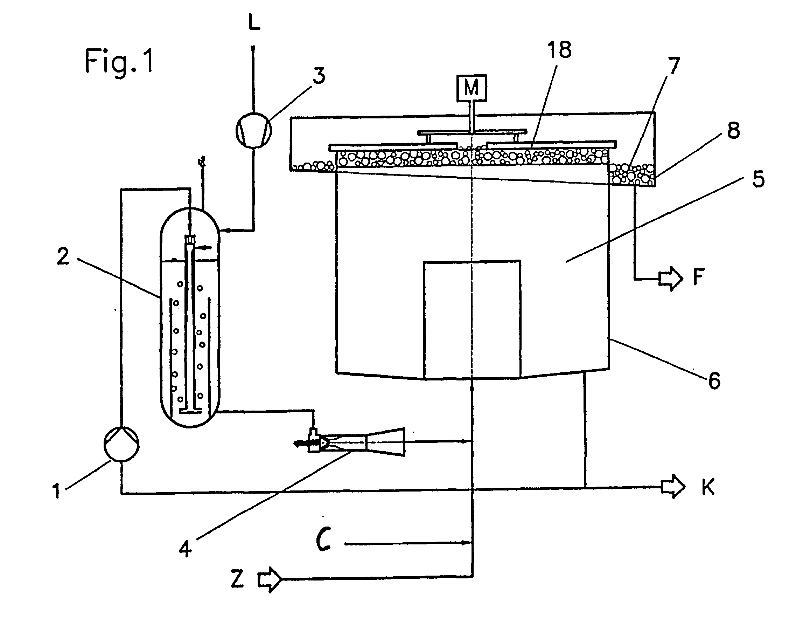

In Fig.1 erkennt man die schematisch dargestellte Flotationsanlage mit einer Vorrichtung 4 zur Belüftung der Flüssigkeit mit Gas. Die Flotationszelle 6 ist zum überwiegenden Teil mit Suspension 5 gefüllt, an deren Oberfläche sich ein Schaum 7 bildet, der einen möglichst großen Teil der auszuflotierenden Feststoffpartikel enthält. Er wird mit einem Räumer 18 in die Schaumrinne 8 transportiert und kann als Flotat F abfließen.

Ein Teil des gereinigten Klarwassers K wird als Recyclestrom mit der Druckerhöhungspumpe 1 auf den gewünschten Sättigungsdruck zwischen 3 bis 10 bar gebracht und in den erfindungsgemäßen Sättigungsbehälter 2 eingebracht. Luft aus der Umgebung wird mit einem Kompressor 3 auf den erforderlichen Sättigungsdruck verdichtet, ebenfalls in den speziell zur Erhöhung des Sättigungsgrades gestalteten Sättigungsbehälter 2 eingebracht und durch intensiven Stoffaustausch in der Flüssigkeit gelöst. Die aufgesättigte Druckflüssigkeit gelangt dann zur Druckreduktion in eine Entspannungsarmatur 4 und wird mit dem mit Feststoffen verunreinigtem Zulauf Z und eventueller Beigabe von Flotationshilfsmitteln C in die Flotationszelle 6 eingebracht, wo der Flotationsprozess stattfindet. Die durch Druckentspannung gebildeten feinsten Gasblasen haften an hydrophoben Feststoffen an und tragen sie zur Oberfläche. Die durch Flotation gereinigte Suspension tritt als Klarwasser K aus der Flotationszelle aus.

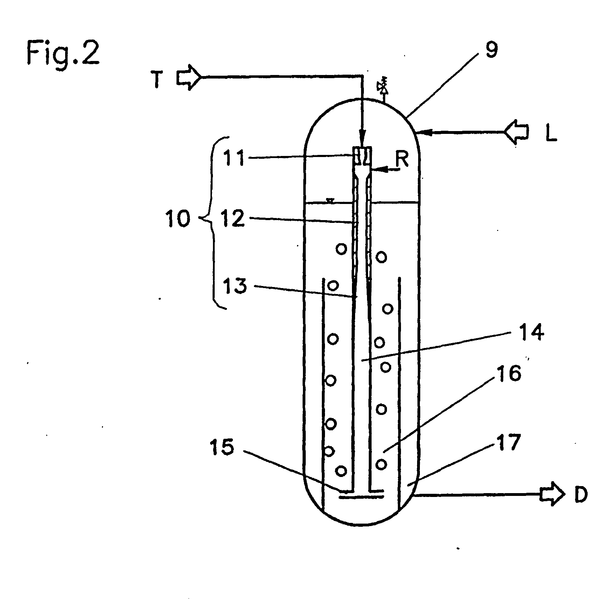

In Fig.2 ist die erfindungsgemäße Vorrichtung zur Luftaufsättigung dargestellt. Der Druckbehälter 9 ist zum überwiegenden Teil mit Flüssigkeit gefüllt, wobei die zur Aufsättigung benötigte Luft L über einen Verdichter auf den erforderlichen Sättigungsdruck gebracht wird und in den Luftraum im Kopf des Druckbehälters eintritt. Der Druckbehälter enthält einen selbstansaugenden Injektor 10, der für hohe Sogverhältnisse ausgelegt ist, da die Lösung von Luft in Wasser nach dem Henry'schen Gesetz erfolgt und wegen der schlechten Löslichkeit von Luft in Wasser am besten in einem Blasenregime möglich ist. Bei der vorliegenden Einrichtung wird die Luft in Form von feinen Blasen mit dem für hohe Sogverhältnisse (80 bis 170 %) ausgelegten selbstansaugenden Injektor 10 in die Flüssigphase eingemischt. Der Betrieb des Injektors 10 bei hohen Luftbeladungen (80 bis 170 %) von vorzugsweise >100 %, führt dazu, dass mehr Gas angesaugt als Flüssigkeit eingebracht wird. Durch die so bewirkte große umgewälzte Luftmenge entsteht sowohl höchste Turbulenz in der Flüssigphase als auch eine große Stoffaustauschfläche, was zu einem wesentlich verbesserten Sättigungsgrad im Vergleich zu bestehenden Systemen führt. Das Verfahren ermöglicht es hohe Luftaufsättigungen schon bei niederen Drücken zu erreichen und somit Energie einzusparen oder die Flüssigkeitsverweilzeit im Sättigungsbehälter zu verringern, d.h. kleinere Apparate zu bauen.

Anschließend wird die Gas-Flüssigkeitsdispersion in einem Rohr 14 bis zum Boden des Druckbehälters geführt, wo ein Radialdiffusor 15 für eine Verteilung über den Querschnitt des zylindrischen Innenraumes 16 sorgt. Die so erzeugten Gasblasen steigen durch die umgebende Flüssigkeit zur Flüssigkeitsoberfläche auf, wobei sich die Luft im Kopf des Druckbehälters sammelt um wiederum im Kreis geführt zu werden. So muss nur die gelöste Luftmenge über den Verdichter auf Sättigungsdruck gebracht und nachgeliefert werden. Die aufgesättigte Druckflüssigkeit D verlässt den Druckbehälter zur Abtrennung noch vorhandener Gasblasen am Boden des Außenraumes 17. Das Einbringen der Blasendispersion am Boden eines zylindrischen Innenraumes ermöglicht weiters eine Abtrennung nicht gelöster Luftblasen von der gesättigten Flüssigkeit. Damit wird ein optimaler Betrieb des nachfolgenden Flotationsschrittes ermöglicht.

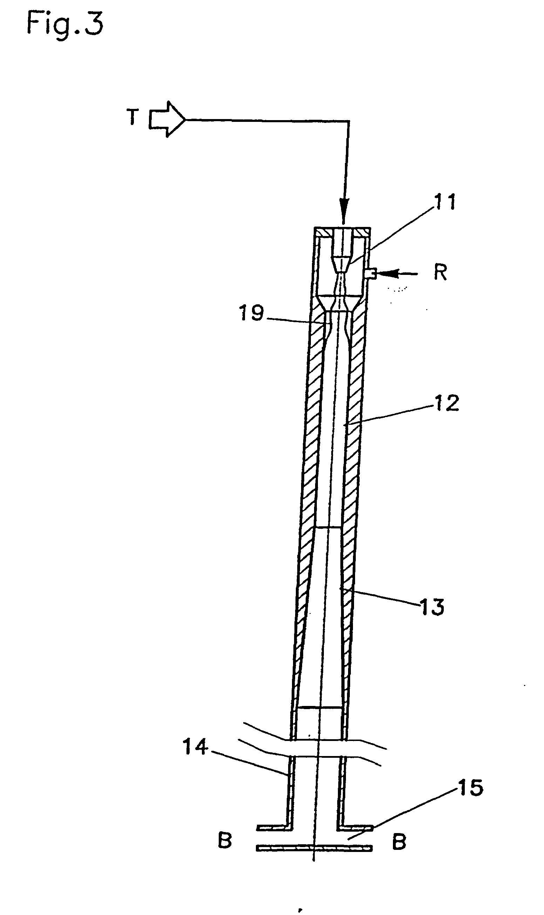

Fig.3 ist eine schematische Darstellung des selbstansaugenden Injektors 10. Er besteht prinzipiell aus Treibstrahldüse 11, Misch- bzw. Impulsaustauschrohr 12 und Diffusor 13. Die auf den Betriebsdruck gebrachte Treibflüssigkeit T wird in der Treibstrahldüse 11 beschleunigt. Der aus der Treibstrahldüse 11 austretende Flüssigkeitsstrom 19 erzeugt durch Aufspreizung nach dem Freistrahlprinzip einen Unterdruck, der zum Ansaugen der Luft R verwendet wird. Im Mischrohr 12 erfolgt eine Vermischung der Luft mit der Treibstrahlflüssigkeit, wobei feine Gasblasen erzeugt werden und bereits ein intensiver Stoffaustausch bei hoher Turbulenz erfolgt. Der Diffusor 13 dient zur Energierückgewinnung. Die Gas-Flüssigkeitsdispersion wird in einem Rohr 14 bis zum Radialdiffusor 15 transportiert, der für eine Verteilung der austretenden Blasendispersion B sorgt.

## Patentansprüche

1. Verfahren zur Belüftung einer Flüssigkeit mit Gas, insbesonders zum Einsatz bei Verfahren zur Abtrennung von Störstoffen aus Suspensionen durch Flotation, umfassend das Eindüsen von Flüssigkeit in ein über einem Flüssigkeitsvolumen befindliches Gasvolumen, **dadurch gekennzeichnet, dass** das Gasvolumen unter Überdruck steht und ein Teilvolumen des Gasvolumens durch den Unterdruck der aus einer im Kopf eines im Inneren des Druckbehälters eingesetzten Injektors mündenden Düse austretenden Flüssigkeit angesaugt und zusammen mit der Flüssigkeit weitertransportiert, dabei intensiv mit der Flüssigkeit durchmischt und in das Flüssigkeitsvolumen ausgetragen wird.

2. Verfahren nach Anspruch 1, **dadurch gekennzeichnet, dass** die Flüssigkeit nach dem Freistrahlprinzip aus der Düse austritt.

3. Verfahren nach Anspruch 1 oder 2, **dadurch gekennzeichnet, dass** das Verfahren bei Luftbeladungen von 80 bis 170%, vorzugsweise über 100%, durchgeführt wird.

4. Verfahren nach einem der Ansprüche 1 bis 3, **dadurch gekennzeichnet, dass** nach der Durchmischung austretende Gasblasen in das Gasvolumen rückgeführt werden.

5. Verfahren nach Anspruch 1, **dadurch gekennzeichnet, dass** der Überdruck des Gasvolumens zwischen 3 und 10 bar beträgt.

6. Vorrichtung zur Belüftung einer Flüssigkeit mit Gas, insbesonders zum Einsatz bei Anlagen oder Vorrichtungen zur Abtrennung von Störstoffen aus Suspensionen durch Flotation, umfassend einen Druckbehälter für die Flüssigkeit und ein darüber befindliches Gasvolumen, mit einem Druckanschluss für das Gas im oberen Bereich des Druckbehälters und eine Düse für das Eindüsen von Flüssigkeit, **dadurch gekennzeichnet, dass** die Düse (11) im Kopf eines im Inneren des Druckbehälters (2) eingesetzten Injektors (10) mündet, welcher Injektor in den unteren, die Flüssigkeit aufnehmenden Teil des Druckbehälters (2) ragt und dessen Kopf mit dem oberen, das Gasvolumen beinhaltenden Bereich des Druckbehälters (2) verbunden ist.

7. Vorrichtung nach Anspruch 6, **dadurch gekennzeichnet, dass** sich die Querschnittsfläche eines Endstückes des Kopfes des Injektors (10) in Strahlrichtung gesehen verringert.

8. Vorrichtung nach Anspruch 6 oder 7, **dadurch gekennzeichnet, dass** anschließend an den Kopf des Injektors (10) ein Mischrohr (12) mit im wesentlichen konstanter Querschnittsfläche anschließt.

9. Vorrichtung nach einem der Ansprüche 6 bis 8, **dadurch gekennzeichnet, dass** sich an den Kopf oder das Mischrohr (12) ein Diffusor (13) mit sich in Strahlrichtung vergrößernder Querschnittsfläche anschließt.

10. Vorrichtung nach Anspruch 9, **dadurch gekennzeichnet, dass** sich an den Diffusor (13) ein Leitrohr (14) für die gasgesättigte Flüssigkeit anschließt, wobei zumindest dieses Leitrohr (14) in die Flüssigkeit eintaucht.

11. Vorrichtung nach einem der Ansprüche 9 oder 10, **dadurch gekennzeichnet, dass** hinter dem Diffusor (13) oder dem Leitrohr (14) ein in der Flüssigkeit untergetauchter Radialdiffusor (15) angeordnet ist.

12. Vorrichtung nach einem der Ansprüche 10 oder 11, **dadurch gekennzeichnet, dass** eine im wesentlichen zylindrische Blende zumindest den unteren Bereich des in der Flüssigkeit eingetauchten Abschnitts des Diffusors (13), Leitrohres (14) oder Radialdiffusors (15) umgibt, welche Blende vom Boden des Druckbehälters (2) ausgeht.

13. Vorrichtung nach Anspruch 12, **dadurch gekennzeichnet, dass** der Austritt für die gasgesättigte Flüssigkeit aus dem Druckbehälter (2) unterhalb des oberen Randes der Blende angeordnet ist.

## Claims

1. Process for aerating a liquid with gas, particularly for use in processes for separating impurities from suspensions by means of flotation, covering the injection of liquid through a nozzle into a volume of gas above a liquid volume, **characterised by** the gas volume being pressurized and a partial volume of the gas volume being sucked in by the vacuum of the liquid emerging from a nozzle which leads into the head of an injector mounted inside the pressure vessel, and being transported together with the liquid, thereby being intimately mixed with the liquid and carried along into the liquid.

2. Process according to Claim 1, **characterised by** the liquid being discharged from the nozzle according to the open jet principle.

3. Process according to Claim 1 or 2, **characterised by** the process being conducted at air charges of 80 to 170%, preferably more than 100%.

4. Process according to one of Claims 1 to 3, **characterised by** the gas bubbles that emerge after mixing being recirculated to the gas volume.

5. Process according to Claim 1, **characterised by** the overpressure of the gas volume being between 3 and 10 bar.

6. Device for aerating a liquid with gas, particularly for use in plants or equipment for separating impurities from a suspension by flotation, covering a pressure vessel for the liquid and a gas volume above it, with a pressure connection for the gas in the upper section of the pressure vessel and a nozzle through which to inject the liquid, **characterised by** the nozzle (11) leading into the head of an injector (10) mounted inside the pressure vessel (2), where the injector (10) protrudes into the lower section of the pressure vessel (2) holding the liquid, and its head being connected to the top section of the pressure vessel (2), which contains the gas volume.

7. Device according to Claim 6, **characterised by** the cross-section area of an end section of the head of the injector (10) decreasing in the direction of the jet.

8. Device according to Claim 6 or 7, **characterised by** a mixing pipe (12) with a largely constant cross-sectional area being provided adjoining the head of the injector (10).

9. Device according to one of Claims 6 to 8, **characterised by** a diffuser (13) with a cross-sectional area that increases in the direction of the jet adjoining the head or the mixing pipe (12).

10. Device according to Claim 9, **characterised by** a draft tube (14) for the liquid saturated with gas adjoining the diffuser (13), where at least this draft tube (14) is immersed in the liquid.

11. Device according to one of Claims 9 or 10, **characterised by** a radial diffuser (15) submerged in the liquid being mounted behind the diffuser (13) or the draft tube (14).

12. Device according to one of Claims 10 or 11, **characterised by** a largely cylindrical orifice plate, surrounding at least the lower part of the diffuser (13), draft tube (14) or radial diffuser (15) sectors immersed in the liquid, and where the orifice plate starts at the base of the pressure vessel (2).

13. Device according to Claim 12, **characterised by** the discharge for the liquid saturated with gas from the pressure vessel (2) being located below the top edge of the orifice plate.

## Revendications

1. Procédé d'aération d'un liquide avec du gaz, surtout pour usage dans le cadre de procédés d'élimination d'impuretés à partir de suspensions par flottation, comprenant l'injection d'un liquide via une buse dans un volume de gaz se trouvant au-dessus d'un volume liquide, **caractérisé en ce que** le volume de gaz est pressurisé et un volume partiel du gaz est aspiré par le vide du liquide émergeant d'une buse débouchant dans la tête d'un injecteur monté à l'intérieur de la cuve sous pression, transporté ensemble avec le liquide, et le gaz est intimement mélangé avec le liquide et transporté vers le volume liquide.

2. Procédé selon la revendication 1, **caractérisé en ce que** le liquide est évacué à partir de la buse selon le principe de jet libre.

3. Procédé selon la revendication 1 ou 2, **caractérisé en ce que** le procédé est exécuté à des charges d'air allant de 80 à 170%, de préférence de plus de 100%.

4. Procédé selon l'une des revendications 1 à 3, **caractérisé en ce que** des soufflures de gaz émergeant après le mélange intime sont recyclées au volume de gaz.

5. Procédé selon la revendication 1, **caractérisé en ce que** la pression du volume de gaz se situe entre 3 et 10 bars.

6. Dispositif d'aération d'un liquide avec du gaz, surtout pour usage dans le cadre d'installations ou dispositifs de séparation d'impuretés à partir de suspensions par flottation, comprenant une cuve sous pression pour le liquide et un volume de gaz se trouvant au-dessus, avec connexion de pression pour le gaz dans la partie supérieure de la cuve sous pression, et avec une buse pour l'injection du liquide, **caractérisé en ce que** la buse (11) débouche dans la tête d'un injecteur (10) monté à l'intérieur de la cuve sous pression (2), où l'injecteur (10) se dresse dans la section inférieure de la cuve sous pression (2) contenant le liquide, et sa tête est reliée à la section supérieure de la cuve sous pression (2), contenant le volume de gaz.

7. Dispositif selon la revendication 6, **caractérisé en ce que** la section transversale d'un bout de la tête de l'injecteur (10) diminue en direction du jet.

8. Dispositif selon la revendication 6 ou 7, **caractérisé en ce qu'**un tube de mélange (12) d'une section transversale largement constante est prévu adjacent à la tête de l'injecteur (10).

9. Dispositif selon l'une des revendications 6 à 8, **caractérisé en ce qu'**un diffuseur (13) d'une section transversale s'élargissant en direction du jet est adjacent à la tête ou le tube de mélange (12).

10. Dispositif selon la revendication 9, **caractérisé en ce qu'**un tube directeur (14) pour le liquide saturé de gaz est adjacent au diffuseur (13), et au moins ce tube (14) est immergé dans le liquide.

11. Dispositif selon l'une des revendications 9 ou 10, **caractérisé en ce qu'**un diffuseur radial (15) submergé dans le liquide est monté derrière le diffuseur (13) ou le tube directeur (14).

12. Dispositif selon l'une des revendications 10 ou 11, **caractérisé en ce qu'**un diaphragme essentiellement cylindrique entoure au moins la partie inférieure du secteur du diffuseur (13) du tube directeur (14) ou du diffuseur radial (15) immergé dans le liquide, ce diaphragme commençant au fond de la cuve sous pression (2).

13. Dispositif selon la revendication 12, **caractérisé en ce que** la décharge du liquide saturé de gaz à partir de la cuve sous pression (2) se situe au-dessous de l'arête supérieure du diaphragme.
